# EUROPEAN PATENT SPECIFICATION

(11) **EP 3 048 677 B1**
(45) Date of publication and mention of the grant of the patent: **25.04.2018**
(21) Application number: 14784815.4
(22) Date of filing: 12.03.2014
(51) Int. Cl.: H04B 1/3816

(54) **CARD HOLDER AND MOBILE TERMINAL**
KARTENHALTER UND MOBILES ENDGERÄT
SUPPORT DE CARTE ET TERMINAL MOBILE

(30) Priority: 16.09.2013 CN 201320573670 U
(43) Date of publication of application: 27.07.2016
(73) Proprietor: ZTE Corporation, Shenzhen, Guangdong 518057 (CN)
(72) Inventor: LU, Jing, Shenzhen Guangdong 518057 (CN); DA, Minquan, Shenzhen Guangdong 518057 (CN)
(74) Representative: Carangelo, Pierluigi
(86) International application number: PCT/CN2014/073313
(87) International publication number: WO 2014/169737

(56) References cited:
- CN-U- 201 937 141
- CN-U- 201 937 691
- CN-U- 202 103 241
- CN-U- 202 772 935
- CN-U- 203 104 554
- US-B1- 8 308 514

## Description

### Technical Field

The present disclosure relates to the field of communications, and in particular to a card holder and a mobile terminal.

### Background

With the development of mobile communications, a new definition of a Nano Subscriber Identity Module (SIM) is applied to a terminal product of Apple Inc., and more and more manufacturers follow to adopt Nano SIMs at present.

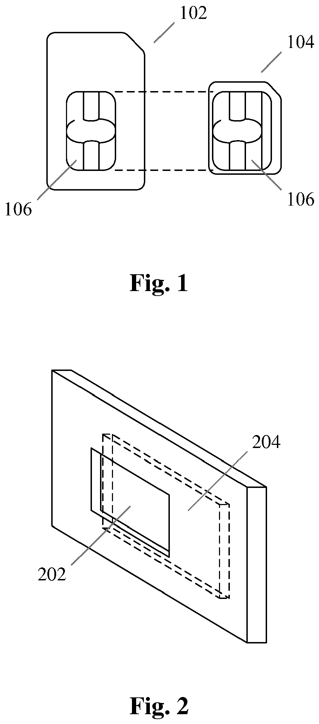

However, as shown in Fig. 1, the size of an SIM 102 which is commonly used at present is usually greater than the size of a Nano SIM 104 produced by Apple Inc., which will cause that the SIM 102 cannot be inserted into a card slot corresponding to the Nano SIM 104, so that some mobile products such as an iphone cannot adopt the common SIM 102; moreover, although the Nano SIM 104 can be inserted into a card slot of the common SIM 102, the problem of difficulty in fixing occurs; and in other words, a conventional mobile terminal cannot be compatible with the two SIMs above.

Furthermore, since the size of the Nano SIM is not compatible with the size of the common SIM, much inconvenience will be brought to a subscriber in an occasion where the SIM is required to be replaced. In another aspect, the design of the Nano SIM adopted by Apple Inc. will play a role in locking the subscriber, and the subscriber is forced to purchase a mobile terminal adopting the Nano SIM due to the fact that the subscriber does not easily replace the SIM usually, thereby resulting in a monopoly to a certain extent and affecting the experience of the subscriber. An effective solution is not proposed for the above-mentioned problem at present.

The related document (CN 201937691 U) discloses mobile phone with double SIM cards, and the related document (US 8308514 B1) discloses SIM card holder.

### Summary

The embodiments of the present disclosure provide a card holder and a mobile terminal, which are intended to at least solve the problem caused by incompatibility of the same mobile terminal with SIMs of different sizes.

According to an aspect of the embodiment of the present disclosure, a card holder is provided, configured to hold a Subscriber Identity Module, SIM, and be inserted into a card slot disposed on a mobile terminal, the card holder comprising: a first groove, first groove, disposed on a front surface of the card holder, and configured to accommodate a first SIM; and a second groove, disposed on a back surface of the card holder, and configured to accommodate a second SIM, wherein a size of the second SIM is different from a size of the first SIM.

In an example embodiment of the present disclosure, the method further comprising: a partition plate, located between the first groove and the second groove, and configured to separate the first SIM from the second SIM, wherein the partition plate and the card holder form an integral whole.

In an example embodiment of the present disclosure, through holes or slot openings are configured on the partition plate.

In an example embodiment of the present disclosure, a first locating point in the first groove corresponds to a second locating point in the second groove, wherein the first locating point is representative of a position, corresponding to a metal contact point on the first SIM, in the first groove, and the second locating point is representative of a position, corresponding to a metal contact point on the second SIM, in the second groove.

In an example embodiment of the present disclosure, further comprising: a limiting bulge, disposed on one side of the card holder, and configured to limit a depth of insertion of the card holder into the card slot; and/or a locking recess, disposed on the other side of the card holder, and configured to lock the card holder in the card slot, wherein locking recess corresponds to a locking mechanism disposed on an inner side of the card slot.

In an example embodiment of the present disclosure, a depth of the first groove is identical to a thickness of the first SIM, and an inner profile of the first groove is identical to an outer profile of the first SIM in shape and size; and/or, a depth of the second groove is identical to a thickness of the second SIM, and an inner profile of the second groove is identical to an outer profile of the second SIM in shape and size.

According to another aspect of the embodiment of the present disclosure, a mobile terminal is provided, comprising a card slot, into which the card holder above mentioned is inserted.

In an example embodiment of the present disclosure, the card holder as claimed in claim 4 is inserted into the card slot, and the card slot comprises: at least one elastic metal pin, disposed at the position corresponding to the first locating point or the second locating point on the card holder, and configured to be in contact and electric connection with the metal contact point on the first SIM on the card holder or the metal contact point on the second SIM on the card holder when a depth of a position of insertion of the card holder into the card slot falls within a pre-set depth interval.

In an example embodiment of the present disclosure, the card slot comprises: a locking mechanism, disposed on an inner wall of the card slot, and configured to lock the card holder in the card slot, wherein the locking mechanism corresponds to a locking bulge disposed on the card holder; and an ejection mechanism, coupled to the locking mechanism, and configured to remove a state of locking the card holder in the card slot after being triggered, and eject the card holder.

In an example embodiment of the present disclosure, the card slot comprises: a limiting recess, disposed at an outlet of the card slot, and configured to limit a depth of insertion of the card holder into the card slot, wherein the limiting recess corresponds to a limiting bulge disposed on the card holder.

In the embodiments of the present disclosure, a mode of configuring a first groove in which a first SIM is disposed on a front surface of a card holder and configuring a second groove in which a second SIM is disposed on a back surface of the card holder is adopted, wherein a size of the second SIM is different from a size of the first SIM. By means of the design of the card holder and the matching between the card holder and the card slot, the technical effect of compatibility with two SIMs of different sizes is achieved on the same mobile terminal, thereby solving the problem caused by incompatibility of the same mobile terminal with SIMs of different sizes.

### Brief Description of the Drawings

The drawings described here are intended to provide further understanding of the present disclosure, and form a part of the present disclosure. The schematic embodiments and descriptions of the present disclosure are intended to explain the present disclosure, and do not form improper limits to the present disclosure. In the drawings:
Fig. 1 is a flowchart of an SIM according to a related art;
Fig. 2 is a diagram of an example card holder according to an embodiment of the present disclosure;
Fig. 3(a) is a top view of another example card holder according to an embodiment of the present disclosure;
Fig. 3(b) is a top view of another example card holder according to an embodiment of the present disclosure;
Fig. 3(c) is a top view of another example card holder according to an embodiment of the present disclosure;
Fig. 4 is a diagram of a card slot in a mobile terminal according to an embodiment of the present disclosure;
Fig. 5 is a diagram of an SIM compatibility device according to an embodiment of the present disclosure;
Fig. 6 is a using diagram of an SIM compatibility device according to an embodiment of the present disclosure; and
Fig. 7 is a using diagram of another SIM compatibility device according to an embodiment of the present disclosure.

### Detailed Description of the Embodiments

The present disclosure is described below with reference to the drawings and the embodiments in detail. It is important to note that the embodiments of the present disclosure and the characteristics in the embodiments can be combined under the condition of no conflicts.

### Embodiment 1

As shown in Fig. 2, according to the embodiment of the present disclosure, a card holder is provided, wherein the card holder includes:
1) a first groove 202, disposed on a front surface of the card holder, and configured to accommodate a first SIM; and
2) a second groove 204, disposed on a back surface of the card holder, and configured to accommodate a second SIM, wherein a size of the second SIM is different from a size of the first SIM.

Wherein, the card holder provided according to the embodiment of the present disclosure may be configured to hold an SIM, the card holder loaded with the SIM may be further inserted into a card slot on the mobile terminal, and then a metal contact point on the SIM in the card holder, such as a metal contact point 106 shown in Fig. 1, can be in contact and electric connection with at least one elastic metal pin disposed in the card slot, thereby forming a loop between the SIM and the mobile terminal, and realizing reading of information in the SIM by the mobile terminal.

As shown in Fig. 2, in the embodiment of the present disclosure different from the related art, the card holder may include the first groove 202 located on the front surface of the card holder and the second groove 204 located on the back surface of the card holder, wherein the first groove 202 may be configured to accommodate the first SIM, and the second groove 204 may be configured to accommodate the second SIM. It is important to note that the 'front surface' and 'back surface' of the card holder are only used for representing one surface of the card holder and the other surface opposite to the surface, and should not be interpreted as any unnecessary limits to the present disclosure.

In the embodiment of the present disclosure, the first SIM and the second SIM may be different in size, and the first groove 202 and the second groove 204 may be configured to accommodate the first SIM and the second SIM respectively. Thus, under a scenario, when the first SIM in the mobile terminal is to be used by a subscriber, the first SIM may be placed in the first groove 202 of the card holder, then the card holder is inserted into the card slot disposed on the mobile terminal, and the front surface of the card holder is attached to one surface, provided with at least one elastic metal pin, in the card slot, so that the metal contact on the first SIM placed in the first groove 202 on the front surface of the card holder is in contact and electric connection with the at least one elastic metal pin, thereby realizing normal working of the first SIM. Under another scenario, when the second SIM in the mobile terminal is to be used by the subscriber, the second SIM may be placed in the second groove 204 of the card holder, the card holder is inserted into the card slot disposed on the mobile terminal, and the back surface of the card holder is attached to one surface, provided with at least one elastic metal pin, in the card slot, so that the metal contact on the second SIM placed in the second groove 204 on the back surface of the card holder is in contact and electric connection with the at least one elastic metal pin, thereby realizing normal working of the second SIM.

Under the scenarios, a mode of configuring the first groove in which the first SIM is disposed on the front surface of the card holder and configuring the second groove in which the second SIM is disposed on the back surface of the card holder is adopted, wherein the size of the second SIM is different from the size of the first SIM. By means of the design of the card holder and the matching between the card holder and the card slot, the technical effect of compatibility with two SIMs of different sizes is achieved on the same mobile terminal, thereby solving the problem caused by incompatibility of the same mobile terminal with SIMs of different sizes.

Certainly, the above is merely an example, and is not intended to form any improper limits to the present disclosure. For example, in some embodiments of the present disclosure, the first SIM and the second SIM may not be specifically embodied as two SIMs shown in Fig. 1, and may be embodied as other feasible modules which are of different sizes, applied to the mobile terminal and used for subscriber identity. There are no limits in the present disclosure.

In an example embodiment, as shown in Fig. 2, in the embodiment of the present disclosure, the card holder may further include a partition plate 206 located between the first groove 202 and the second groove 204, wherein the partition plate 206 and the card holder may form an integral whole, and configured to separate the first SIM from the second SIM.

In the embodiment of the present disclosure, as an example mode, the partition plate 206 may be disposed between the first groove 202 and the second groove 204 on the card holder. Generally speaking, the partition plate 206 may be directly formed by remaining parts, located between the first groove 202 and the second groove 204, of the card holder after the first groove 202 and the second groove 204 are processed on the card holder, so that the partition plate is shown to be integrated with the card holder.

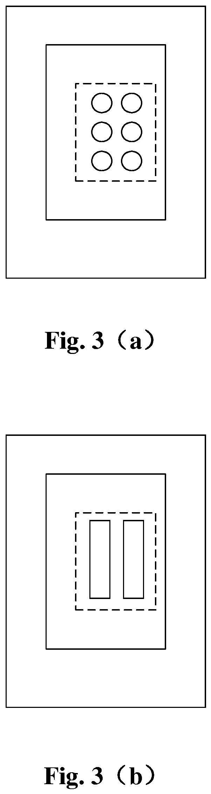

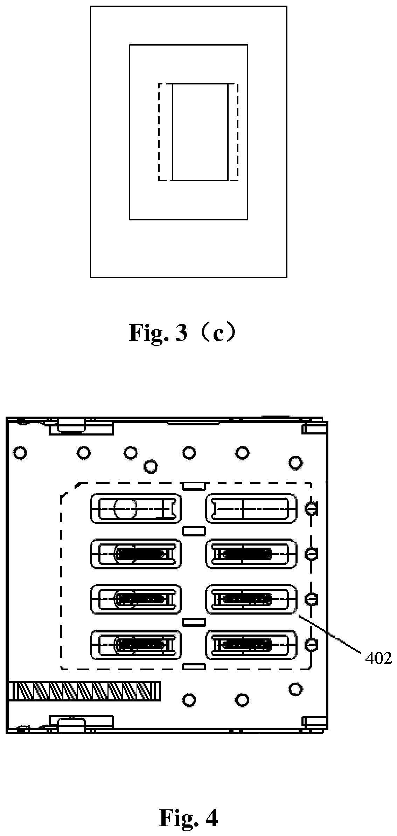

More preferably, as shown in Fig. 3(a), 3(b) and 3(c), in some embodiments of the present disclosure, through holes or slot openings may be configured on the partition plate 206. Fig. 3(a) shows a situation that through holes 302 are configured on the partition plate 206. Fig. 3(b) shows a situation that slot openings 304 are configured on the partition plate 206. More generally, the through holes 302 or the slot openings 304 may be further expanded to form a situation of an incomplete partition plate shown in Fig. 3(c). It should be understood that multiple implementation modes above and equivalent or obviously-replaced modes thereof shall fall within the protection scope of the present disclosure.

In an example embodiment, in the embodiment of the present disclosure, a first locating point in the first groove 202 may correspond to a second locating point in the second groove 204, wherein the first locating point is representative of a position, corresponding to a metal contact point on the first SIM, in the first groove 202, and the second locating point is representative of a position, corresponding to a metal contact point on the second SIM, in the second groove 204.

In the mode, the positions of the first groove 202 and the second groove 204 may be set in accordance with the first locating point and the second locating point, wherein due to the fact that the positions of the first locating point and the second locating point correspond to each other, the first locating point corresponds to the position, corresponding to the metal contact point on the first SIM, in the first groove 202, and the second locating point corresponds to the position, corresponding to the metal contact point on the second SIM, in the second groove 204, no matter whether the first SIM or the second SIM is used in the mobile terminal by the subscriber, the positions of the metal contact points on the two SIMs in a using process correspond to each other, so that the SIMs can be matched with a group of elastic metal pins on the same card slot, that is to say, regardless of placement of the first SIM or the second SIM on the card holder, the same card slot and the same group of elastic metal pins in the same card slot can be used correspondingly, thereby achieving the technical effect of compatibility with the two SIMs of different sizes on the premise that there is no process for increasing the number of the elastic metal pins disposed in the card slot in the related art.

Specifically, in the embodiment of the present disclosure, in view of a situation that the at least one elastic metal pin is disposed on a fixed side in the card slot, when the usage of the subscriber is switched from the first SIM to the second SIM, the card holder is usually need to be reversed and then be inserted into the card slot, so that a corresponding relationship between the first locating point and the second locating point in the card holder may be shown to that the first locating point and the second locating point are symmetrically disposed on the card holder with respect to an overturning axis of the card holder during switching of the SIMs. Generally speaking, the overturning axis is a centre line of the card holder in an insertion direction. Specially, in some embodiments of the present disclosure, the first locating point and the second locating point may also be disposed in the centre of the card holder, thereby simplifying the design of the card holder.

In an example embodiment, in the embodiment of the present disclosure, the card holder may further include: a limiting bulge, disposed on one side of the card holder, and configured to limit a depth of insertion of the card holder into the card slot; and/or, a locking recess, disposed on the other side of the card holder, and configured to lock the card holder in the card slot, wherein locking recess corresponds to a locking mechanism disposed on an inner side of the card slot. There are many mechanisms capable of realizing a limiting function or a locking function in the related art, no detailed descriptions being given here in the present disclosure.

In an example embodiment, the depth of the first groove 202 is identical to the thickness of the first SIM, and an inner profile of the first groove 202 is identical to an outer profile of the first SIM in shape and size; and/or, the depth of the second groove 204 is identical to the thickness of the second SIM, and an inner profile of the second groove 204 is identical to an outer profile of the second SIM in shape and size. Under the scenario, the first SIM and/or the second SIM may be placed in the first groove 202 and the second groove 204 in a matched manner respectively, thereby obtaining a better fixing effect in addition to fixing the SIMs via the card holder and the card slot.

The present disclosure provides a preferred embodiment which is intended to further explain the present disclosure. However, it is important to note that the preferred embodiment is only intended to better describe the present disclosure, and does not form improper limits to the present disclosure.

### Embodiment 2

According to the embodiment of the present disclosure, a mobile terminal is further provided, which includes a card slot, wherein the card slot is configured to insert the card holder according to the embodiment 1.

In an example embodiment, as shown in Fig. 4, in the embodiment of the present disclosure, the card slot may include: at least one elastic metal pin 402, disposed at the position corresponding to the first locating point or the second locating point on the card holder, and configured to be in contact and electric connection with the metal contact point on the first SIM on the card holder or the metal contact point on the second SIM on the card holder when a depth of a position of insertion of the card holder into the card slot falls within a pre-set depth interval.

In an example embodiment, in the embodiment of the present disclosure, the card slot may further include: a locking mechanism, disposed on an inner wall of the card slot, and configured to lock the card holder in the card slot, wherein the locking mechanism corresponds to a locking bulge disposed on the card holder; and an ejection mechanism, coupled to the locking mechanism, and configured to remove a state of locking the card holder in the card slot after being triggered, and eject the card holder.

In an example embodiment, the card slot may further include: a limiting recess, disposed at an outlet of the card slot, and configured to limit a depth of insertion of the card holder into the card slot, wherein the limiting recess corresponds to a limiting bulge disposed on the card holder.

The present disclosure provides a preferred embodiment which is intended to further explain the present disclosure. However, it is important to note that the preferred embodiment is only intended to better describe the present disclosure, and does not form improper limits to the present disclosure.

### Embodiment 3

The embodiment of the present disclosure provides a more specific technical solution. In the solution, an SIM card slot and an independent card holder capable of being pulled out are configured, and the size of the SIM are compatible via a limiting device on front and back surfaces of the card holder.

An SIM compatibility device includes an SIM card slot and a card holder which is compatible with a common SIM and a Nano SIM simultaneously. During working, the card holder is inserted into the card slot. During card replacement, the card holder may be completely taken out to be separated from the card slot. There are a group of elastic metal sheets in the card slot. Due to the fact that merely one group of elastic metal sheets may be in contact with an SIM, the problem of simultaneous working of the two SIMs is avoided. The limiting device includes a concave card slot disposed on the card holder and configured to fix the common SIM and the Nano SIM. The card slot is provided with a spring device, a spring may be triggered by using a needle, the card holder may be ejected, and therefore the subscriber is convenient to replace the SIM.

Under the scenario, the common SIM and the Nano SIM may be put into the same card holder, and SIMs of different sizes may be fixed via a limiter, so that the inserted SIMs can work normally.

In order to solve the problem how to realize the compatibility of a card holder with two SIMs of different sizes, and in order to further ensure perfect contact and position firmness, a card holder limiter and card slot metal contact points in the embodiment of the present disclosure are introduced below in detail.

The card holder limiter comprises a card holder body and two different grooves on the front and back surfaces of the card holder body, wherein the groove on the front surface is in a Nano SIM shape and has a certain depth, and a Nano SIM may be placed therein; and the groove on the back surface is in a common SIM shape and has a certain depth, and a common SIM may be placed therein.

The respective compatibility modes of the large SIM and the small SIM are described below, and operation principles and working modes thereof are introduced.

When the Nano SIM needs to be inserted, the spring device is triggered by using a card needle firstly, and the card holder is ejected. After the card holder is completely taken out, a surface marking the Nano SIM is selected according to a mark on the card holder, to place the Nano SIM into the groove of the card holder. Then, the card holder is inserted into the card slot and locked, a contact point of the Nano SIM is in contact with an elastic metal sheet in the card slot, and the Nano SIM works normally.

When the common SIM needs to be inserted, the spring device is triggered by using the card needle firstly, and the card holder is ejected. After the card holder is completely taken out, a surface marking common SIM is selected according to a mark on the card holder, to place the common SIM into the corresponding groove of the card holder. Then, the card holder is inserted into the card slot and locked, a contact point of the common SIM is in contact with the elastic metal sheet in the card slot, and the common SIM works normally.

The SIM compatibility device is simple in structure and reliable in operation, and does not occupy an additional space. On one hand, the degree of convenience for the subscriber to use a mobile phone can be improved, and on the other hand, the compatibility of the mobile terminal is improved.

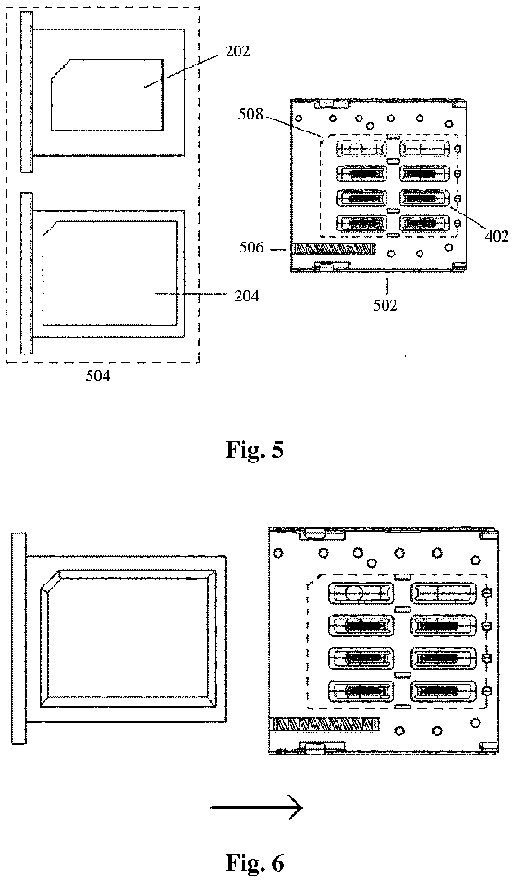

In order to make it easy to understand, the technical solution in the present disclosure is described below in detail with reference to Fig. 5. As shown in Fig. 5, the whole SIM compatibility component comprises three parts, namely an SIM card slot 502, an SIM card holder 504 and a spring ejection device 506.

The SIM card slot comprises a frame, at least one elastic metal pin 402 and a sliding rail 508, wherein the frame is configured to hold the at least one elastic metal pin and the sliding rail so as to form a whole. The at least one elastic metal pin is located on one surface of the card slot 502 and is configured to be connected to SIM signal pins. Due to the complete compatibility of gold finger definitions and an interval of the common SIM and the Nano SIM, a set of elastic metal pins can be compatible with the common SIM and the Nano SIM. The sliding rail is configured to fix the card holder 504 to ensure connection between the card slot 502 and the card holder 504, and provide a movement path along which the card holder 504 is inserted and pulled out.

Furthermore, in the embodiment of the present disclosure, a Nano SIM limiter comprises a Nano SIM groove and a card holder 504, and is configured to accommodate the Nano SIM. A common SIM limiter comprises a common SIM groove and a card holder 504, and is configured to accommodate the common SIM.

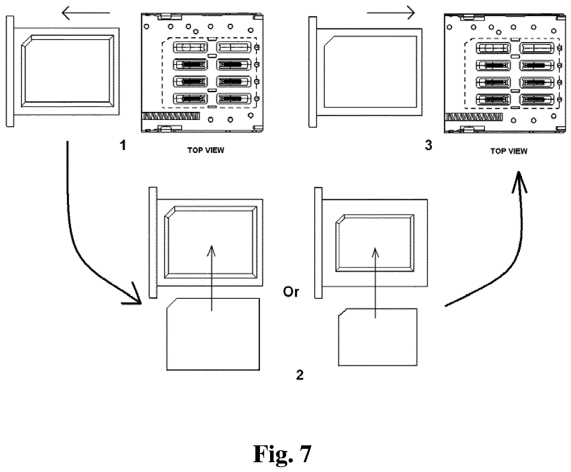

A working mode of the compatibility device under the condition that the Nano SIM and the common SIM are inserted respectively is explained below with reference to Fig. 6 and Fig. 7. The front surface of the card holder 504 is defined as a surface A, and the back surface of the card holder 504 is defined as a surface B.
1) In an insertion process of the Nano SIM:
   As shown in Fig. 6, when the Nano SIM needs to be inserted, the card needle is firstly inserted into a hole where the spring is located, the spring device is triggered, and the card holder 504 is ejected out. After the card holder 504 is completely taken out, the surface marking Nano SIM is selected according to the mark on the card holder 504, to place the Nano SIM into the corresponding groove of the card holder 504. The groove is manufactured according to the shape of the Nano SIM, and the Nano SIM can be placed in the groove in a completely matched manner and will not shake. Then, the surface, loading the card, of the card holder 504, is inserted into the corresponding surface, provided with the metal contact, in the card slot 502 and locked, after the card holder 504 moves in place, the contact point of the Nano SIM is in contact with the elastic metal sheet in the card slot 502, and the Nano SIM works normally.
2) In an insertion process of the common SIM:
   As shown in Fig. 7, when the common SIM needs to be inserted, the card needle is firstly inserted into the hole where the spring is located, the spring device is triggered, and the card holder 504 is ejected out. After the card holder 504 is completely taken out, the surface marking common SIM is selected according to the mark on the card holder 504, and place the common SIM into the corresponding groove of the card holder 504. The groove is manufactured according to the shape of the common SIM, and the common SIM can be placed in the groove in a completely matched manner and will not shake. Then, the surface, loading the card, of the card holder 504, is inserted into the corresponding surface, provided with the metal contact, in the card slot 502 and locked, after the card holder 504 moves in place, the contact point of the common SIM is in contact with the elastic metal sheet in the card slot 502, and the common SIM works normally.

In addition, in the embodiment of the present disclosure, after the card holder 504 is pulled out, the card slot 502 is internally empty, the elastic metal sheets of the card slot 502 do not contact, and the whole device does not work. Due to there is merely one group of elastic metal sheets, merely one SIM is in contact with the at least one elastic metal pin at the same time even if two SIMs are inserted, so that the situation that the two SIMs simultaneously work does not exist, and the subscriber can safely use the SIM. Moreover, the compatibility device does not occupy an extra plate distribution space, the structure is compact, electronic devices are eliminated, electric energy is not consumed, merely one spring exists on a machine, the working principle is simple and reliable, and the compatibility of SIMs of different sizes can be realized by using relatively low cost.

The above is only the preferred embodiments of the present disclosure, and is not intended to limit the present disclosure. There can be various modifications and variations in the present disclosure for those skilled in the art. Any modifications, equivalent replacements, improvements and the like within the spirit and principle of the present disclosure shall fall within the protection scope of the present disclosure.

### Industrial Applicability

The embodiments of the present disclosure relate to the field of mobile communications, provide the card holder and the mobile terminal, solve the problem caused by the incompatibility of the same mobile terminal with the SIMs of different sizes, and improve the experience of the subscriber.

## Claims

1. A card holder, configured to hold a Subscriber Identity Module, SIM, and be inserted into a card slot disposed on a mobile terminal, the card holder comprising:
a first groove (202), disposed on a front surface of the card holder, and configured to accommodate a first SIM; and
a second groove (204), disposed on a back surface of the card holder, and configured to accommodate a second SIM, wherein a size of the second SIM is different from a size of the first SIM;
a limiting bulge, disposed on one side of the card holder, and configured to limit a depth of insertion of the card holder into the card slot; and a locking recess, disposed on the other side of the card holder, and configured to lock the card holder in the card slot, wherein locking recess corresponds to a locking mechanism disposed on an inner side of the card slot.

2. The card holder as claimed in claim 1, further comprising:
a partition plate, located between the first groove (202) and the second groove (204), and configured to separate the first SIM from the second SIM, wherein the partition plate and the card holder form an integral whole.

3. The card holder as claimed in claim 2, wherein through holes or slot openings are configured on the partition plate.

4. The card holder as claimed in any one of claims 1 to 3, wherein a first locating point in the first groove (202) corresponds to a second locating point in the second groove (204), wherein the first locating point is representative of a position, corresponding to a metal contact point on the first SIM, in the first groove (202), and the second locating point is representative of a position, corresponding to a metal contact point on the second SIM, in the second groove (204).

5. The card holder as claimed in any one of claims 1 to 3, wherein a depth of the first groove (202) is identical to a thickness of the first SIM, and an inner profile of the first groove (202) is identical to an outer profile of the first SIM in shape and size; and/or, a depth of the second groove (204) is identical to a thickness of the second SIM, and an inner profile of the second groove (204) is identical to an outer profile of the second SIM in shape and size.

6. A mobile terminal, comprising a card slot, into which the card holder as claimed in any one of claims 1 to 5 is inserted.

7. The mobile terminal as claimed in claim 6, wherein the card holder as claimed in claim 4 is inserted into the card slot, and the card slot comprises:
at least one elastic metal pin (402), disposed at the position corresponding to the first locating point or the second locating point on the card holder, and configured to be in contact and electric connection with the metal contact point on the first SIM on the card holder or the metal contact point on the second SIM on the card holder when a depth of a position of insertion of the card holder into the card slot falls within a pre-set depth interval.

8. The mobile terminal as claimed in claim 6 or 7, wherein the card slot comprises:
a locking mechanism, disposed on an inner wall of the card slot, and configured to lock the card holder in the card slot, wherein the locking mechanism corresponds to a locking bulge disposed on the card holder; and
an ejection mechanism, coupled to the locking mechanism, and configured to remove a state of locking the card holder in the card slot after being triggered, and eject the card holder.

9. The mobile terminal as claimed in claim 6 or 7, wherein the card slot comprises:
a limiting recess, disposed at an outlet of the card slot, and configured to limit a depth of insertion of the card holder into the card slot, wherein the limiting recess corresponds to a limiting bulge disposed on the card holder.

## Patentansprüche

1. Kartenhalterung, die konfiguriert ist, ein Teilnehmer-Identitätsmodul (Subscriber Identity Module, SIM) zu halten und in einen Kartenschacht in einem mobilen Endgerät eingeführt zu werden, wobei die Kartenhalterung Folgendes umfasst:
eine erste Ausnehmung (202), die auf einer Vorderseite der Kartenhalterung angeordnet ist und konfiguriert ist, eine erste SIM-Karte aufzunehmen; und
eine zweite Ausnehmung (204), die auf einer Rückseite der Kartenhalterung angeordnet ist und konfiguriert ist, eine zweite SIM-Karte aufzunehmen, wobei sich eine Größe der zweiten SIM-Karte von einer Größe der ersten SIM-Karte unterscheidet;
einen Begrenzungswulst, der auf einer Seite der Kartenhalterung angeordnet ist und konfiguriert ist, eine Einführungstiefe der Kartenhalterung in den Kartenschacht zu begrenzen; und
einen Absperrungseinschnitt, der auf der anderen Seite der Kartenhalterung angeordnet ist und konfiguriert ist, die Kartenhalterung im Kartenschacht abzusperren, wobei der Absperrungseinschnitteinem Absperrungsmechanismus entspricht, der auf einer Innenseite des Kartenschachts angeordnet ist.

2. Kartenhalterung nach Anspruch 1, ferner umfassend:
eine Trennplatte, die zwischen der ersten Ausnehmung (202) und der zweiten Ausnehmung (204) positioniert ist und konfiguriert ist, die erste SIM-Karte von der zweiten SIM-Karte zu trennen, wobei die Trennplatte und die Kartenhalterung ein einstückiges Ganzes bilden.

3. Kartenhalterung nach Anspruch 2, wobei Durchgangslöcher oder Schlitzöffnungen auf der Trennplatte konfiguriert sind.

4. Kartenhalterung nach einem der Ansprüche 1 bis 3, wobei ein erster Positionierungspunkt in der ersten Ausnehmung (202) einem zweiten Positionierungspunkt in der zweiten Ausnehmung (204) entspricht, wobei der erste Positionierungspunkt eine Position, die einem Metallkontaktpunkt auf der ersten SIM-Karte entspricht, in der ersten Ausnehmung (202) verkörpert und der zweite Positionierungspunkt eine Position, die einem Metallkontaktpunkt auf der zweiten SIM-Karte entspricht, in der zweiten Ausnehmung (204) verkörpert.

5. Kartenhalterung nach einem der Ansprüche 1 bis 3, wobei eine Tiefe der ersten Ausnehmung (202) identisch mit einer Dicke der ersten SIM-Karte ist und ein Innenprofil der ersten Ausnehmung (202) bezüglich Form und Größe identisch mit einem Außenprofil der ersten SIM-Karte ist; und/oder eine Tiefe der zweiten Ausnehmung (204) identisch mit einer Dicke der zweiten SIM-Karte ist und ein Innenprofil der zweiten Ausnehmung (204) bezüglich Form und Größe identisch mit einem Außenprofil der zweiten SIM-Karte ist.

6. Mobiles Endgerät, das einen Kartenschacht umfasst, in den die Kartenhalterung nach einem der Ansprüche 1 bis 5 eingeführt wird.

7. Mobiles Endgerät nach Anspruch 6, wobei die Kartenhalterung nach Anspruch 4 in den Kartenschacht eingeführt wird und der Kartenschacht umfasst:
zumindest einen elastischen Metallstift (402), der an der Position angeordnet ist, die dem ersten Positionierungspunkt oder dem zweiten Positionierungspunkt auf der Kartenhalterung entspricht und konfiguriert ist, um in Kontakt und elektrischer Verbindung mit dem Metallkontaktpunkt auf der ersten SIM-Karte auf der Kartenhalterung oder mit dem Metallkontaktpunkt auf der zweiten SIM-Karte auf der Kartenhalterung zu stehen, wenn eine Einführungspositionstiefe der Kartenhalterung in den Kartenschacht innerhalb eines vorbestimmten Tiefenbereichs liegt.

8. Mobiles Endgerät nach Anspruch 6 oder 7, wobei der Kartenschacht Folgendes umfasst:
einen Absperrungsmechanismus, der auf einer Innenwand des Kartenschachts angeordnet ist und konfiguriert ist, die Kartenhalterung im Kartenschacht abzusperren, wobei der Absperrungsmechanismus einem Absperrungswulst entspricht, der auf der Kartenhalterung angeordnet ist;
einen Auswurfmechanismus, der mit dem Absperrungsmechanismus gekoppelt ist und konfiguriert ist, einen abgesperrten Zustand der Kartenhalterung im Kartenschacht zu lösen, nachdem er ausgelöst wurde, und die Kartenhalterung auszuwerfen.

9. Mobiles Endgerät nach Anspruch 6 oder 7, wobei der Kartenschacht Folgendes umfasst:
einen Begrenzungseinschnitt, der an einem Ausgang des Kartenschachts angeordnet ist und konfiguriert ist, eine Einführungstiefe der Kartenhalterung in den Kartenschacht zu begrenzen, wobei der Begrenzungseinschnitt einem Begrenzungswulst entspricht, der auf der Kartenhalterung angeordnet ist.

## Revendications

1. Support de carte, conçu pour contenir un module d'identité d'abonné, SIM et pour être inséré dans un emplacement pour carte disposé sur un terminal mobile, le support de carte comprenant :
une première rainure (202), disposée sur une surface avant du support de carte et conçue pour recevoir un premier SIM ; et
une seconde rainure (204), disposée sur une surface arrière du support de carte et conçue pour recevoir un second SIM, une taille du second SIM étant différente d'une taille du premier SIM ;
un bourrelet de restriction, disposé sur un côté du support de carte et conçu pour limiter une profondeur d'insertion du support de carte dans l'emplacement pour carte ; et
un évidement de verrouillage, disposé sur l'autre côté du support de carte et conçu pour verrouiller le support de carte dans l'emplacement pour carte, l'évidement de verrouillage correspondant à un mécanisme de verrouillage disposé sur un côté interne de l'emplacement pour carte.

2. Support de carte selon la revendication 1, comprenant en outre :
une plaque de séparation, située entre la première rainure (202) et la seconde rainure (204) et conçue pour séparer le premier SIM du second SIM, la plaque de séparation et le support de carte formant un tout d'un seul tenant.

3. Support de carte selon la revendication 2, dans lequel des trous traversants ou ouvertures à fentes sont conçus sur la plaque de séparation.

4. Support de carte selon l'une quelconque des revendications 1 à 3, dans lequel un premier point de localisation dans la première rainure (202) correspond à un second point de localisation dans la seconde rainure (204), le premier point de localisation étant représentatif d'une position, correspondant à un point de contact métallique sur le premier SIM, dans la première rainure (202) et le second point de localisation étant représentatif d'une position, correspondant à un point de contact métallique sur le second SIM, dans la seconde rainure (204).

5. Support de carte selon l'une quelconque des revendications 1 à 3, dans lequel une profondeur de la première rainure (202) est identique à une épaisseur du premier SIM et un profil interne de la première rainure (202) est identique à un profil externe du premier SIM en forme et taille ; et/ou une profondeur de la seconde rainure (204) est identique à une épaisseur du second SIM et un profil interne de la seconde rainure (204) est identique à un profil externe du second SIM en forme et taille.

6. Terminal mobile comprenant un emplacement pour carte, dans lequel est inséré le support de carte selon l'une quelconque des revendications 1 à 5.

7. Terminal mobile selon la revendication 6, dans lequel le support de carte selon la revendication 4 est inséré dans l'emplacement pour carte et l'emplacement pour carte comprend :
au moins une broche métallique élastique (402), disposée au niveau de la position correspondant au premier point de localisation ou au second point de localisation sur le support de carte et conçue pour être en contact et en connexion électrique avec le point de contact métallique sur le premier SIM sur le support de carte ou le point de contact métallique sur le second SIM sur le support de carte lorsqu'une profondeur d'une position d'insertion du support de carte dans l'emplacement pour carte se trouve dans un intervalle de profondeur prédéfini.

8. Terminal mobile selon la revendication 6 ou 7, dans lequel l'emplacement pour carte comprend :
un mécanisme de verrouillage, disposé sur une paroi interne de l'emplacement pour carte et conçu pour verrouiller le support de carte dans l'emplacement pour carte, le mécanisme de verrouillage correspondant à un bourrelet de verrouillage disposé sur le support de carte ; et
un mécanisme d'éjection, accouplé au mécanisme de verrouillage et conçu pour libérer un état de verrouillage du support de carte dans l'emplacement pour carte après avoir été déclenché et pour éjecter le support de carte.

9. Terminal mobile selon la revendication 6 ou 7, dans lequel l'emplacement pour carte comprend :
un évidement de restriction, disposé au niveau d'une sortie de l'emplacement pour carte et conçu pour limiter une profondeur d'insertion du support de carte dans l'emplacement pour carte, l'évidement de restriction correspondant à un bourrelet de restriction disposé sur le support de carte.
